# NOUVEAU FASCICULE DE BREVET EUROPEEN

(11) **EP 3 237 353 B2**
(45) Date de publication et mention de la décision concernant l'opposition: **03.06.2026**
(45) Mention de la délivrance du brevet: 20.04.2022
(21) Numéro de dépôt: 15823671.1
(22) Date de dépôt: 18.12.2015
(51) Int. Cl.: C04B 28/02, C04B 28/04, C04B 38/02, C04B 111/52

(54) **PROCÉDÉ DE FABRICATION EN CONTINU D'UNE MOUSSE MINÉRALE À FAIBLE DENSITÉ**
VERFAHREN ZUR KONTINUIERLICHEN HERSTELLUNG EINES MINERALSCHAUMS MIT NIEDRIGER DICHTE
METHOD FOR THE CONTINUOUS PRODUCTION OF A LOW-DENSITY MINERAL FOAM

(30) Priorité: 23.12.2014 FR 1463226
(43) Date de publication de la demande: 01.11.2017
(73) Titulaire: Holcim Technology Ltd, 6300 Zug (CH)
(72) Inventeur: BERNARD, Freddy, 38780 Eyzin (FR); JEZEQUEL, Pierre-Henri, 69001 Lyon (FR); REBOUSSIN, Sandrine, 69008 Lyon (FR)
(74) Mandataire: Regimbeau
(86) Numéro de dépôt international: PCT/FR2015/053620
(87) Numéro de publication internationale: WO 2016/102838

(56) Documents cités:
- WO-A1-2007/068127
- WO-A1-2007/134349
- WO-A1-2013/150148
- AT-A- A1 485 058
- CN-A- 103 011 880
- FR-A1- 2 986 790
- JP-A- 2008 189 526
- US-A- 3 729 328
- US-A1- 2017 349 498

## Description

La présente invention se rapporte à un procédé de fabrication en continu d'une mousse minérale faible densité à base de ciments, ainsi qu'à l'utilisation de cette mousse en tant que matériau isolant.

De manière générale, la mousse minérale est très avantageuse pour de nombreuses applications en raison de ses propriétés d'isolation thermique. La mousse minérale désigne un matériau sous forme d'une mousse. Ce matériau est plus léger que le béton traditionnel à cause des pores ou espaces vides qu'il comprend, on parle aussi de mousse de ciment. Ces pores ou espaces vides sont dus à la présence d'un gaz dans la mousse minérale et peuvent se présenter sous forme de bulles. En effet avec 1 m³ de matière première, il est possible de fabriquer environ 5 m³ de produit fini, soit un matériau composé de 20 % de matière et 80 % de gaz (valable pour un élément de masse volumique de 400 kg/m³). Ainsi, la mousse minérale comprend un réseau de bulles plus ou moins éloignées les unes des autres, c'est-à-dire de poches de gaz contenues dans une enveloppe solide de liant minéral.

La fabrication des mousses minérales est délicate car elle résulte de la solidification d'une mousse liquide en une mousse solide. Cette mousse solide étant d'abord une mousse liquide c'est-à-dire un réseau de bulles d'air ou de gaz ceinte par un coulis de liant hydraulique qui évolue dans le temps en une mousse minérale solide. Aussi la fabrication des mousses minérales implique le passage par une étape de fabrication d'une mousse liquide qui devra être stable. La stabilité de la mousse liquide est donc importante, et il convient que le procédé de fabrication puisse contrôler les phénomènes de déstabilisation des mousses pendant la prise, comme par exemple la coalescence, le murissement d'Ostwald ou le drainage. Ces Difficultés sont exacerbées lorsque le procédé de fabrication est un procédé en continu, c'est-à-dire que le produit fini est élaboré d'une façon ininterrompue. Les procédés de fabrication en continu sont bien adaptés à un milieu industriel et sont préconisés en usine ou sur chantier.

Le document FR 2986790 A1 divulgue un procédé continu de production d'un mortier allégé pour la façade et le sol. L'expansion du matériau se produit in-situ, pendant l'application.

La difficulté dans la réalisation des mousses minérales en continu dans un contexte industriel est donc de fabriquer une mousse stable palliant ces phénomènes de déstabilisation. Or, les procédés connus de fabrication de mousses ne permettent pas d'obtenir des mousses suffisamment stables.

De plus lorsque cette mousse minérale est utilisée comme matériau d'isolation, il est avantageux qu'elle puisse être projetée sur un support, celui-ci pouvant être aussi bien horizontal, incliné ou vertical. Il devient alors intéressant que la mousse s'accroche sur ce support et qu'elle reste solidaire de ce support jusqu'à sa solidification. En effet lorsque la mousse est à l'état liquide, elle peut s'écouler sous l'effet de la gravité et il est important qu'une fois sur son support, cette mousse ne coule pas ou ne tombe pas sous l'effet de la gravité.

Afin de répondre aux exigences des utilisateurs, il est devenu nécessaire de trouver un procédé pour réaliser une mousse minérale en continu dans un contexte industriel ou sur chantier, avec une mise en place facilitée de cette mousse.

Aussi le problème que se propose de résoudre l'invention est de trouver un procédé de réalisation en continu d'une mousse minérale, celle-ci pouvant restée en place lorsqu'elle est appliquée sur un support indifféremment de la forme et de l'inclinaison du support.

L'invention se rapporte aussi à une mousse minérale susceptible d'être obtenu selon le procédé de l'invention dans lequel le mélange de l'étape (i) ou de l'étape (ii) comprend en outre un sel de métal de transition.

Selon un autre objet de l'invention, la mousse minérale selon l'invention peut être utilisée comme matériau de construction. Par exemple, la mousse minérale peut être utilisée comme isolant projeté ou non, ou comme élément de remplissage de structures.

La présente invention cherche à fournir de nouvelles mousses minérales qui ont une ou plusieurs des caractéristiques suivantes :
- la mousse minérale selon l'invention possède d'excellentes propriétés de stabilité. Notamment il est possible d'obtenir une mousse qui puisse être projetée et s'accrochée sur un support, quelle que soit la position de ce support et indépendamment des forces de gravité ;
- la mousse minérale selon l'invention possède d'excellentes propriétés thermiques, et notamment une très faible conductivité thermique. Diminuer la conductivité thermique des matériaux de construction est hautement désirable puisqu'elle permet d'obtenir une économie d'énergie de chauffage dans les immeubles d'habitation ou de travail. De plus cette diminution permet de réduire les ponts thermiques, particulièrement dans les constructions de bâtiments à plusieurs étages et ayant une isolation thermique par l'intérieur, notamment les ponts thermiques des planchers intermédiaires.

La présente invention se rapporte à un procédé de réalisation en continu d'une mousse minérale dont la masse volumique à l'état sec (d) est comprise de 40 à 600 kg/m³, comprenant les étapes suivantes :
(i) mélanger
   ¤ du ciment ;
   ¤ un agent réducteur d'eau ;
   ¤ 0,5 à 10 %, % en masse par rapport à la masse totale de ciment, de particules ultrafines présentant un angle de contact liquide-solide compris de 30° à 140°, et dont le D50 est compris 10 à 600 nm ;
   ¤ de l'eau, avec un ratio massique eau / ciment compris de 0,3 à 2,5 ;
(ii) ajouter au mélange de 0,5 à 10 % d'un agent porogène, % en masse par rapport à la masse de ciment;
(iii) mettre en place le mélange obtenu à l'étape (ii) sur un support ;
(iv) laisser le mélange s'expanser sur le support.

Le ciment convenant pour réaliser la mousse minérale selon le procédé de l'invention est de préférence le ciment décrit conformément à la norme européenne NF EN 197-1 d'avril 2012 ou leurs mélanges. Le ciment préféré convenant selon l'invention est le ciment Portland CEM I, seul ou en mélange avec d'autres ciments tels que ceux décrit conformément à la norme européenne NF EN 197-1 d'avril 2012.

De préférence, le mélange de l'étape (i) du procédé selon l'invention comprend de 60 à 95% de ciment, préférentiellement de 65 à 90 %, pourcentage en masse par rapport à la masse totale du mélange de l'étape (i) sans eau.

Un ciment d'aluminates de calcium pourrait également convenir pour réaliser la mousse minérale selon l'invention. Il pourrait s'agir d'un ciment comprenant une phase minéralogique C₄A₃$, CA, C₁₂A₇, C₃A ou le C₁₁A₇CaF₂ ou leurs mélanges, tel que par exemple les Ciments Fondu^{®}, les ciments sulfoalumineux, les ciments d'aluminates de calcium conformes à la norme européenne NF EN 14647 de décembre 2006, le ciment obtenu à partir du clinker décrit dans la demande de brevet WO 2006/018569 ou leurs mélanges. Le ciment d'aluminates de calcium convenant pour réaliser la mousse minérale selon l'invention pourrait se présenter soit sous forme cristallisée soit sous forme amorphe.

Le ciment d'aluminates de calcium préféré selon l'invention est le Ciment Fondu^{®}.

De préférence, le ciment du mélange de l'étape (i) du procédé selon l'invention a une surface spécifique Blaine supérieure ou égale à 5000 cm²/g, plus préférentiellement supérieure ou égale à 6500 cm²/g. De préférence, le ciment du mélange de l'étape (i) du procédé selon l'invention est un ciment dont la surface spécifique Blaine est comprise de 5000 à 9000 cm²/g.

Il peut être envisagé d'utiliser plusieurs ciments dans le mélange de l'étape (i) du procédé selon l'invention de surface spécifique Blaine différentes. Par exemple, il peut être utilisé un ciment de surface spécifique Blaine supérieure ou égale à 5000 cm²/g, mélangé avec un ciment de surface spécifique Blaine inférieure ou égale à 5000 cm²/g, par exemple un ciment Portland.

Le ciment pouvant être utilisé selon la présente invention peut être broyé et/ou séparé (par un séparateur dynamique) afin d'obtenir un ciment ayant une surface spécifique Blaine supérieure ou égale à 5000 cm²/g. Ce ciment peut être qualifié d'ultrafin. Le ciment peut par exemple être broyé selon 2 méthodes.

Selon une première méthode, le ciment ou le clinker peut être broyé jusqu'à une surface spécifique Blaine de 5000 à 9000 cm²/g. Un séparateur de haute efficacité, de deuxième génération ou de troisième génération, ou un séparateur de très haute efficacité, peut être utilisé dans cette première étape pour séparer le ciment ayant la finesse désirée et écarter le ciment n'ayant pas la finesse désirée. Ce ciment est alors renvoyé dans le broyeur.

Selon une deuxième méthode, un ciment peut passer dans un séparateur de très haute efficacité, dit THF (très haute finesse), afin de séparer les particules de ciment ayant une surface spécifique Blaine supérieure ou égale à la finesse cible (la finesse cible étant supérieure à 5000 cm²/g) et les particules de ciment ayant une surface spécifique Blaine inférieure à la finesse cible. Les particules de ciment ayant une surface spécifique Blaine supérieure ou égale à la finesse cible peuvent être utilisées telles quelles. Les particules de ciment ayant une surface spécifique Blaine inférieure à la finesse cible peuvent être écartées ou broyées séparément jusqu'à l'obtention de la surface spécifique Blaine souhaitée. Les broyeurs qui peuvent être utilisés dans les deux méthodes sont par exemple un broyeur à boulets, un broyeur vertical, une presse à rouleaux, un broyeur horizontal (par exemple de type Horomill^{ⓒ}) ou un broyeur vertical agité (par exemple de type Tower Mill).

Le mélange de l'étape (i) du procédé selon l'invention pourrait également contenir du sulfate de calcium, qui peut être du gypse, du sulfate de calcium anhydre ou du sulfate de calcium semihydrate.

Le mélange de l'étape (i) du procédé selon l'invention comprend un agent réducteur d'eau, un plastifiant ou un superplastifiant. Un agent réducteur d'eau permet de réduire d'environ 10 à 15 % en masse la quantité d'eau de gâchage pour un temps d'ouvrabilité donné. A titre d'exemple d'agent réducteur d'eau, on peut citer les lignosulphonates, les acides hydroxycarboxyliques, les carbohydrates, et autres composés organiques spécifiques, comme par exemple le glycerol, l'alcool polyvinylique, l'alumino-methyl siliconate de sodium, l'acide sulfanilique et la caséine (voir Concrete Admixtures Handbook, Properties Science and Technology, V.S. Ramachandran, Noyés Publications, 1984)

Les superplastifiants appartiennent à la nouvelle génération des agents réducteurs d'eau et permettent de réduire d'environ 30 % en masse la quantité d'eau de gâchage pour un temps d'ouvrabilité donné. A titre d'exemple de superplastifiant, on peut citer les superplastifiants du type PCP sans agent anti-mousse. On entend entre autre par le terme « PCP » ou « polycarboxylate polyoxyde » selon la présente invention un copolymère des acides acryliques ou acides méthacryliques, et de leurs esters de poly(oxyde d'éthylène) (POE).

De préférence, le mélange de l'étape (i) du procédé selon l'invention comprend de 0,01 à 1 %, plus préférentiellement de 0,05 à 0,5 % d'un agent réducteur d'eau, d'un plastifiant ou d'un superplastifiant, pourcentage exprimé en masse par rapport à la masse du mélange de l'étape (i).

Lorsque l'agent réducteur d'eau, le plastifiant ou le superplastifiant est utilisé en solution, la quantité est exprimée en matière active dans la solution.

Selon une variante de l'invention, le mélange de l'étape (i) ou de l'étape (ii) du procédé selon l'invention ne comprend pas d'agent anti-mousse, ou tout agent ayant la propriété de déstabiliser une émulsion air dans un liquide. Certains superplastifiants commerciaux peuvent contenir des agents anti-mousses et par conséquent ces superplastifiants pourrait ne pas convenir selon l'invention.

Le mélange de l'étape (i) ou de l'étape (ii) du procédé selon l'invention pourrait comprendre un agent retardateur. L'agent retardateur correspond à la définition du retardateur de prise mentionné dans la norme européenne NF EN 934-2 de septembre 2002.

Selon une variante de l'invention, le mélange de l'étape (i) ou de l'étape (ii) du procédé selon l'invention ne comprend pas d'agent moussant.

De préférence, le mélange de l'étape (i) ou de l'étape (ii) du procédé selon l'invention comprend en outre un sel de métal de transition, par exemple un sel de manganèse ou un sel de fer. Il peut être envisagé que le sel de métal de transition pourrait être un précurseur de catalyseur facilitant la décomposition de l'agent porogène en oxygène. A titre d'exemple de précurseur de catalyseur, on peut citer les sels et les oxydes de manganèse, comme par exemple les permanganates et les manganates, les sels et les oxydes de fer, de cobalt, de cuivre, de molybdène, de tungstène, de chrome, d'argent et des enzymes de préférence des catalases. Dans certain cas, le sel de métal de transition peut être fourni par le ciment lui-même, quand il s'agit notamment de ciment contenant beaucoup de fer, qu'il soit sous forme d'oxyde ou non.

Le précurseur de catalyseur peut notamment être choisi parmi les sels de manganèse (II) solubles dans l'eau, tels que l'acétate de manganèse (II), le sulfate de manganèse (II), le chlorure de manganèse (II) et le nitrure de manganèse (II). Ces sels peuvent se décomposer, dans un milieu basique, en composés insolubles comprenant du manganèse au degré d'oxydation +4, tels que MnO₂, qui est un catalyseur connu pour la décomposition des peroxydes.

Le mélange de l'étape (i) du procédé selon l'invention comprend de 0,5 à 10 %, % en masse par rapport à la masse totale de ciment, de particules ultrafines présentant un angle de contact liquide-solide compris de 30° à 140°, et dont le D50 est compris 10 à 600 nm.

De préférence, le mélange de l'étape (i) du procédé selon l'invention comprend de 1 à 9 %, % en masse par rapport à la masse totale de ciment, de particules ultrafines présentant un angle de contact liquide-solide compris de 30° à 140°, et dont le D50 est compris 10 à 600 nm.

De préférence, le mélange de l'étape (i) du procédé selon l'invention comprend de 2 à 8 %, % en masse par rapport à la masse totale de ciment, de particules ultrafines présentant un angle de contact liquide-solide compris de 30° à 140°, et dont le D50 est compris 10 à 600 nm.

De préférence, les particules ultrafines du mélange de l'étape (i) du procédé selon l'invention sont partiellement hydrophobées, par exemple par un acide stéarique. Il est également possible de parler de fonctionnalisation.

Les particules ultrafines du mélange de l'étape (i) du procédé selon l'invention présentent un angle de contact liquide-solide compris de 30° à 140°, de préférence compris de 40° à 130 °, encore plus préférentiellement de 70° à 130°.

Cet angle de contact est aussi appelé angle de mouillage. Par l'expression « angle de contact » ou « angle de mouillage », on entend l'angle formé entre une interface liquide/vapeur et une surface solide. Il s'agit de l'angle formé entre l'interface d'un liquide et la surface solide sur lequel le liquide est posé. Il est généralement considéré qu'une paroi est hydrophile lorsque l'angle de contact statique d'une goutte d'eau disposée sur la paroi est inférieur à environ 30 degrés et que la paroi est hydrophobe à des niveaux d'hydrophobie variables lorsque l'angle de contact statique d'une goutte d'eau distillée disposée sur la paroi est supérieur à environ 30 degrés et inférieure à environ 140°. La paroi est dite superhydrophobe lorsque l'angle de contact statique d'une goutte d'eau distillée disposée sur la paroi est supérieur à environ 140 degrés. Pour réaliser une mousse à partir du procédé selon l'invention, il serait souhaitable que les particules ultrafines du mélange de l'étape (i) ne soient pas superhydrophobes, c'est-à-dire ne présentant pas un angle de contact strictement supérieur à 140°.

De préférence, les particules ultrafines du mélange de l'étape (i) du procédé selon l'invention ne sont pas hydrophiles.

Les particules ultrafines convenant selon le procédé de l'invention présentent un D50 compris 10 à 600 nm, de préférence compris de 20 to 500 nm, plus préférentiellement compris de 30 à 200 nm. Le D50, également noté D_{V}50, correspond au 50^{ème} centile de la distribution en volume de taille des particules, c'est-à-dire que 50 % du volume est constitué de particules dont la taille est inférieure au D50 et 50 % de taille supérieure au D50.

Il est à noter que les particules ultrafines comprennent généralement des particules élémentaires présentant un diamètre compris de 10 à 50 nm. Ces particules élémentaires peuvent s'agglomérer pour former des particules agglomérées présentant un diamètre de 40 nm à 150 nm. Ces particules agglomérées peuvent s'agglomérer pour former des agrégats présentant un diamètre de 100 nm à 600 nm.

Les particules ultrafines convenant selon le procédé de l'invention peuvent provenir d'un ou plusieurs matériaux choisis parmi les poudres de calcaire, les carbonates de calcium précipités, les pouzzolanes naturelles et artificielles, les pierres ponces, les cendres volantes broyées, la silice hydratée, en particulier les produits décrits dans document le FR 2708592, et leurs mélanges.

Selon une variante, le mélange de l'étape (i) du procédé selon l'invention comprend en outre une addition minérale telle qu'une pouzzolane, un laitier, du carbonate de calcium, une cendre volante, un sable ou leurs mélanges, et dont les particules présentent un D50 compris de 0,1 à 4 mm.

De préférence, le mélange de l'étape (i) du procédé selon l'invention peut comprendre de 15 à 50 % d'addition minérales, de préférence de 15 à 40 %, encore plus de 20 à 35%, les pourcentages étant exprimés en masse par rapport à la masse du mélange de l'étape (i).

De préférence le D50 des particules d'additions minérales convenant au mélange de l'étape (i) du procédé selon l'invention est compris de 0,2 à 500 µm, par exemple de 0,25 à 250 µm. Le D₅₀ des particules minérales est de préférence de 0,1 à 150 µm, plus préférentiellement de 0,1 à 100 µm.

Les additions minérales convenant au mélange de l'étape (i) du procédé selon l'invention sont choisies parmi le carbonate de calcium, la silice, le verre broyé, les billes de verre pleines ou creuses, les granulés de verre, les poudres de verre expansé, les aérogels de silice, les fumées de silice, les laitiers, les sables siliceux sédimentaires broyés, les cendres volantes ou les matériaux pouzzolaniques ou leurs mélanges.

Les additions minérales convenant au mélange de l'étape (i) du procédé selon l'invention peuvent être des matériaux pouzzolaniques (par exemple tels que définis dans la norme Européenne NF EN 197-1 de février 2001 paragraphe 5.2.3), des fumées de silice (par exemple telles que définies dans la norme Européenne NF EN 197-1 de février 2001 paragraphe 5.2.7), des laitiers (par exemple tels que définis dans la norme Européenne NF EN 197-1 de février 2001 paragraphe 5.2.2), des matériaux contenant du carbonate de calcium, par exemple du calcaire (par exemple tel que défini dans la norme Européenne NF EN 197-1 paragraphe 5.2.6) des additions siliceuses (par exemple telles que définies dans la norme « Béton » NF P 18-509 » des cendres volantes (par exemple celles telles que décrites dans la norme Européenne NF EN 197-1 de février 2001 paragraphe 5.2.4) ou leurs mélanges.

Une cendre volante est généralement une particule pulvérulente comprise dans les fumées des centrales thermiques alimentées au charbon. Elle est généralement récupérée par précipitation électrostatique ou mécanique. La composition chimique d'une cendre volante dépend principalement de la composition chimique du charbon brûlé et du procédé utilisé dans la centrale thermique de laquelle elle est issue. Il en est de même pour sa composition minéralogique. Les cendres volantes utilisées selon l'invention peuvent être de nature siliceuse ou calcique.

Les laitiers sont généralement obtenus par refroidissement rapide du laitier fondu provenant de la fusion du minerai de fer dans un haut fourneau. Les laitiers convenant au mélange de l'étape (i) du procédé selon l'invention peuvent être choisi parmi les laitiers granulés de haut fourneau selon la norme Européenne NF EN 197-1 de février 2001 paragraphe 5.2.2.

Les fumées de silice convenant au mélange de l'étape (i) du procédé selon l'invention peuvent être un matériau obtenu par réduction de quartz de grande pureté par du charbon dans des fours à arcs électriques utilisés pour la production de silicium et d'alliages de ferrosilicium. Les fumées de silice sont généralement formées de particules sphériques comprenant au moins 85% en masse de silice amorphe.

De préférence, les fumées de silice convenant au mélange de l'étape (i) du procédé selon l'invention peuvent être choisi parmi les fumées de silice selon la norme Européenne NF EN 197-1 de février 2001 paragraphe 5.2.7.

Les matériaux pouzzolaniques convenant au mélange de l'étape (i) du procédé selon l'invention peuvent être des substances naturelles siliceuses ou silico-alumineuses, ou une combinaison de celles-ci. Parmi les matériaux pouzzolaniques, on peut citer les pouzzolanes naturelles, qui sont en général des matériaux d'origine volcanique ou des roches sédimentaires, et les pouzzolanes naturelles calcinées, qui sont des matériaux d'origine volcanique, des argiles, des schistes ou des roches sédimentaires, activés thermiquement.

De préférence, les matériaux pouzzolaniques convenant au mélange de l'étape (i) du procédé selon l'invention peuvent être choisi parmi les matériaux pouzzolaniques selon la norme Européenne NF EN 197-1 de février 2001 paragraphe 5.2.3.

De préférence, les additions minérales convenant au mélange de l'étape (i) du procédé selon l'invention peuvent être des poudres calcaires et/ou des laitiers et/ou des cendres volantes et/ou des fumées de silice. De préférence, les additions minérales convenant au mélange de l'étape (i) du procédé selon l'invention sont des poudres calcaires et/ou des laitiers.

D'autres additions minérales convenant au mélange de l'étape (i) du procédé selon l'invention sont les poudres calcaires, siliceuses ou silico-calcaires, ou leurs mélanges.

Les additions minérales convenant au mélange de l'étape (i) du procédé selon l'invention peuvent provenir en partie ou en totalité du ciment lorsqu'il s'agit d'un ciment composé.

Le mélange de l'étape (i) du procédé selon l'invention comprend de l'eau. Le ratio massique eau / ciment est compris de 0,45 à 1,3, de préférence de 0,5 à 1,2, plus préférentiellement de 0,6 à 0,8. Ce ratio eau / ciment total peut varier par exemple à cause de la demande en eau des particules ultrafines ou des additions minérales lorsque celles-ci sont utilisées. Ce ratio eau / ciment total est défini comme étant le ratio en masse de la quantité d'eau (E) sur la masse de tous les ciments (C).

Selon une variante, le mélange de l'étape (i) du procédé selon l'invention peut comprendre de la chaux hydraulique.

De préférence, le mélange de l'étape (i) du procédé selon l'invention ne comprend pas de granulats légers comme décrit conformément à la norme européenne NF EN 206-1 d'avril 2004, par exemple la perlite.

Selon une autre variante de l'invention, le mélange de l'étape (i) du procédé selon l'invention ne comprend pas de charges légères, par exemple des billes de polystyrène.

L'étape (ii) du procédé selon l'invention comprend l'ajout au mélange de l'étape (i) de 0,5 à 10 % d'un agent porogène, % en masse par rapport à la masse de ciment.

De préférence, l'étape (ii) du procédé selon l'invention comprend l'ajout de 2 à 8% d'un agent porogène.

L'agent porogène ajouté à l'étape (ii) du procédé selon l'invention peut être une solution de peroxyde d'hydrogène, une solution d'acide peroxomonosulfurique, une solution d'acide persoxodisulfurique, une solution de peroxydes alcalins, une solution de peroxydes alcalinoterreux ou une solution de peroxyde organique tel que l'acide peroxoacétique ou l'acide peroxobenzoïque, ou une suspension de particules d'aluminium ou leurs mélanges.

De préférence, l'agent porogène est le peroxyde d'hydrogène. De préférence, il s'agit de peroxyde d'hydrogène dont la concentration est comprise de 8% à 35%.

A l'issue de l'étape (ii) du procédé selon l'invention un mélange est obtenu. Ce mélange peut être réalisé selon le procédé de l'invention en utilisant un dispositif comprenant des tuyaux, éventuellement de tailles différentes, le tout formant une canalisation. Cette canalisation peut comprendre ou non un auxiliaire mécanique au malaxage tel qu'un mélangeur statique. La réaction entre l'agent porogène et le sel de métal de transition (précurseurs de catalyseur) et/ou le ciment démarre immédiatement, et une fraction de l'oxygène total est immédiatement libérée, de telle façon que la canalisation contient des bulles. A la sortie de la canalisation, le mélange qui contient une fraction de bulles est destiné à être immédiatement coulé dans un moule ou projeté sur un support. Lors de cette opération de sortie du mélange de la canalisation, ce mélange n'est pas fractionné.

De préférence, le mélange obtenu à l'étape (ii) du procédé selon l'invention n'est pas fractionné

Par l'expression « n'est pas fractionné », il est entendu généralement que le mélange sort de la canalisation sous forme d'un jet et garde son intégrité, et en particulier il n'est pas pulvérisé dans le moule ou sur le support, même si quelques gouttes occasionnelles peuvent se former lors du contact avec le support.

L'étape (iii) du procédé selon l'invention comprend la mise en place du mélange obtenu à l'étape (ii) sur un support. Cette étape de mise en place peut se faire sans utiliser de buses de pulvérisation ou un équivalent. De plus cette mise en place peut se faire sans utiliser d'éléments en sortie du dispositif.

En effet la pulvérisation aboutira généralement au fractionnement du mélange ou à la formation de gouttes. La mise en place peut se faire en laissant s'écouler naturellement le mélange obtenu à l'étape (ii) sur le support. Ainsi le mélange en s'écoulant naturellement n'est pas propulsé ou accélérer ce qui pourrait déstabiliser le mélange et former des gouttes.

De préférence, à l'étape (iii) le mélange est mis en place sans utiliser de buse de pulvérisation.

De préférence, l'étape (iii) du procédé selon l'invention est réalisée sans pulvérisation.

Selon une variante de l'invention, l'étape (iii) peut être répétée afin d'obtenir des couches successives ou superposées. De préférence, la couche la plus récemment déposée est déposée sur une couche ayant déjà acquis une résistance mécanique par hydratation du ciment.

Le support mis en oeuvre à l'étape (iii) du procédé selon l'invention peut être vertical, horizontal, incliné ou dans n'importe quelle position. Il peut également s'agir un réceptacle, d'un moule, d'un bloc de construction creux ou plein, d'un mur creux ou plein, d'un plafond, d'un sol (chape de ravoirage ou d'isolation).

Le support utilisé à l'étape (iii) du procédé selon l'invention peut être traité préalablement à la mise en place du mélange obtenu à l'étape (ii).

Selon une variante, le procédé selon l'invention utilise en outre un accélérateur de l'hydratation du ciment, qui est présent soit dans le mélange de l'étape (i) ou (ii), soit en surface du support de l'étape (iii).

De préférence, le mélange de l'étape (i) du procédé selon l'invention comprend en outre un accélérateur de l'hydratation du ciment, par exemple du chlorure de calcium.

Lorsqu'un accélérateur de l'hydratation du ciment est présent dans le mélange de l'étape (i) ou (ii), il s'agit de préférence d'un sel de calcium, comme par exemple du chlorure de calcium. L'accélérateur de l'hydratation du ciment peut être intégré en continu avant l'étape (iii) du procédé selon l'invention.

Lorsqu'un accélérateur de l'hydratation du ciment est présent en surface du support de l'étape (iii), il s'agit de préférence de sulfate d'aluminium.

L'accélérateur de l'hydratation du ciment peut être introduit à l'étape (i) avant ou après l'ajout d'eau, ou pulvérisé sur le support de l'étape (iii).

De l'eau peut être appliquée sur le support mis en oeuvre à l'étape (iii) du procédé selon l'invention avant l'étape (iii).

D'autres additifs peuvent aussi être utilisés dans le procédé selon l'invention tel que par exemple des pigments colorés, des agents hydrophobes, des agents dépolluants (par exemple des zéolites ou du dioxide de titane).

A l'étape (iv) du procédé selon l'invention, le mélange s'expanse. Cette expansion a commencé dès que l'agent porogène réagit chimiquement, c'est-à-dire à l'étape (ii) et se termine à l'étape (iv). La mousse minérale aérée ainsi obtenue peut être lissée et présenter une épaisseur supérieure à 1 cm. Puis la prise s'effectue jusqu'à obtenir une mousse minérale solide.

Cette expansion correspond au dégagement gazeux suite à la réaction chimique de l'agent porogène, éventuellement en présence d'un catalyseur. Lorsque l'agent porogène est à base de peroxyde, la réaction de décomposition de l'agent porogène effectuée en présence d'un catalyseur est une réaction exothermique générant du dioxygène et de l'eau. Il est en effet connu que la décomposition des peroxydes est accélérée en présence d'un métal.

Le mélange de l'étape (i) peut être préparé à l'aide de malaxeurs classiquement utilisés pour réaliser les coulis de ciment. Il peut s'agir d'un malaxeur à coulis, d'un malaxeur de centrale à béton, d'un malaxeur décrit dans la norme européenne NF EN 196-1 d'avril 2006 - Paragraphe 4.4, ou d'un mélangeur-batteur à mouvement planétaire.

Le mélange de l'étape (i) peut être préparé en introduisant dans le malaxeur les différents matériaux sous forme de poudres. Les poudres sont malaxées pour obtenir un mélange homogène. Puis l'eau est introduite dans le malaxeur. Ensuite les particules minérales, les adjuvants tels que par exemple l'agent réducteur d'eau, le plastifiant, le superplastifiant, l'accélérateur, l'agent thixotropant, l'agent viscosant, l'agent rétenteur d'eau ou le retardateur sont introduits lorsqu'ils sont présents dans la formulation de la mousse minérale. La pâte obtenue est malaxée pour obtenir un mélange de coulis de ciment.

De préférence, les mélanges de l'étape (i) ou (ii) sont maintenus sous agitation à l'aide de la pâle défloculeuse, pendant toute la durée du procédé de fabrication de la mousse minérale selon l'invention.

Le procédé selon l'invention peut être mis en oeuvre sur un chantier en installant un système de moussage directement sur le chantier, ou mis en oeuvre dans une usine de préfabrication.

L'invention a également pour objet une mousse minérale susceptible d'être obtenue selon le procédé de l'invention dans lequel le mélange de l'étape (i) ou de l'étape (ii) comprend en outre un sel de métal de transition.

De préférence, la mousse minérale réalisée selon le procédé de l'invention présente une densité à l'état sec de 50 à 600 kg /m³, plus préférentiellement de 60 à 500 kg /m³, encore plus préférentiellement de 70 à 450 kg /m³. Il est à noter que la densité de la mousse minérale à l'état frais (densité humide) diffère de la densité de la mousse minérale à l'état sec, c'est-à-dire après la prise (densité de matériau durci). La densité de la mousse minérale à l'état frais est toujours supérieure à la densité de la mousse à l'état sec.

L'invention offre comme avantage que la mousse minérale selon l'invention présente une grande légèreté, et notamment une densité très faible.

L'invention offre comme autre avantage que la mousse minérale selon l'invention possède d'excellentes propriétés de stabilité. Notamment les bulles qui composent la mousse minérale à l'état frais sont peu dégradées après coulage dans le moule ou dépose sur le support.

Le support peut être de différentes natures et différentes formes.

Le support peut être un réceptable à remplir. Dans ce cas, il est envisagé de remplir des blocs à maçonner avec la mousse minérale selon l'invention. Par exemple, ce peut être des blocs à maçonner, des blocs de terre cuite, des blocs de béton cellulaire que l'on vient remplir avec la mousse selon l'invention.

Le support peut être un mur à recouvrir de mousse de minérale selon l'invention. Par exemple, ce peut être un voile de béton, un béton banché, un mur de bloc à maçonner, un mur de blocs de terre cuite, un mur de blocs de béton cellulaire, un mur recouvert de mortier ou d'enduit,

Le support peut être de différentes natures comme du béton, de la terre cuite, du plâtre, du bois brut, une plaque de plâtre, du carton ou tout autre matériau utilisé en construction.

Le support peut être traité, ou recouvert d'une première couche de mousse minérale selon l'invention. Le support pourra être traité avant dépose de la mousse. Le traitement pourra par exemple consister en une ou plusieurs projections d'eau, en la projection de solutions d'accélérateurs de prise tels que du sulfate d'aluminium, ou en la dépose de primaires d'accrochage, ou toute autre solution de nature physique ou chimique permettant d'accélérer la prise du ciment à l'interface entre le support et le mélange, ou de permettre une meilleure adhésion du mélange sur le support ou d'accroître la rugosité du support.

L'invention offre comme autre avantage que la mousse minérale selon l'invention possède d'excellentes propriétés thermiques, et notamment une très faible conductivité thermique. Diminuer la conductivité thermique des matériaux de construction est hautement désirable puisqu'elle permet d'obtenir une économie d'énergie de chauffage dans les immeubles d'habitation ou de travail. De plus la mousse minérale selon l'invention permet d'obtenir de bonnes performances d'isolation sur de faibles épaisseurs et donc de préserver les surfaces et volumes habitables. La conductivité thermique (encore appelée lambda (λ)) est une grandeur physique caractérisant le comportement des matériaux lors du transfert de chaleur par conduction. La conductivité thermique représente la quantité de chaleur transférée par unité de surface et par une unité de temps sous un gradient de température. Dans le système international d'unités, la conductivité thermique est exprimée en watts par mètre kelvin, (W·m⁻¹·K⁻¹). Les bétons classiques ou traditionnels ont une conductivité thermique entre 1,3 et 2,1 mesurée à 23°C et 50 % d'humidité relative.

La mousse minérale selon l'invention présente une conductivité thermique comprise de 0,03 à 0,5 W/m.K, de préférence de 0,04 à 0,15 W/m.K, plus préférentiellement de 0,045 à 0,10 W/m.K.

L'invention offre comme autre avantage que la mousse minérale selon l'invention possède de bonnes propriétés mécaniques, et notamment une bonne résistance à la compression comparé aux mousses minérales connues. La mousse minérale selon l'invention présente une résistance à la compression comprise de 0,04 à 5 MPa, de préférence de 0,05 à 2 MPa, plus préférentiellement de 0,05 à 1 MPa.

L'invention se rapporte également à l'utilisation de la mousse minérale selon l'invention comme matériau de construction. Par exemple la mousse minérale selon l'invention peut être utilisée pour couler des murs, planchers, toitures pendant un chantier. Il est aussi envisagé de réaliser des éléments préfabriqués en usine de préfabrication à partir de la mousse selon l'invention tels que des blocs, des panneaux.

La mousse minérale selon l'invention peut être coulée sur des murs pendant un chantier.

L'invention se rapporte également à l'utilisation de la mousse minérale selon l'invention comme matériau d'isolation, en particulier comme matériau d'isolation thermique ou phonique.

Avantageusement, la mousse minérale selon l'invention permet de remplacer dans certains cas la laine de verre, la laine minérale, l'amiante ou les isolants en polystyrène et le polyuréthane.

Avantageusement, la mousse minérale selon l'invention peut être utilisée en comblement ou remplissage d'un espace vide ou creux d'un bâtiment, d'un mur, d'une cloison, d'un bloc de maçonnerie par exemple un parpaing, d'une brique, d'un sol ou d'un plafond. De tels matériaux ou éléments de constructions composites comprenant la mousse minérale selon l'invention sont également des objets de l'invention *per se.*

Avantageusement, la mousse minérale selon l'invention peut être utilisée comme matériau de bouchage.

Avantageusement, la mousse minérale selon l'invention peut être utilisée comme revêtement de façade par exemple pour isoler un bâtiment par l'extérieur. Dans ce cas, la mousse minérale selon l'invention pourra être enduite d'un enduit de finition.

L'invention a également pour objet un système comprenant la mousse minérale selon l'invention. La mousse peut être présente dans le système comme matériau isolant. Elle peut être coulée en vertical entre deux parois, choisies par exemple parmi des voiles béton, des murs de briques, plaques de plâtre, plaque de bois, par exemple les panneaux de bois à lamelles minces orientées, ou panneaux fibrociment, le tout formant le système.

Le système selon l'invention est avantageusement capable de résister ou diminuer les transferts d'air et thermohydriques, c'est-à-dire que cet élément possède une perméabilité contrôlée aux transferts d'air, d'eau sous forme de vapeur ou de liquide.

Le système selon l'invention comprend de préférence au moins une ossature ou un élément structurel. Cette ossature peut être en béton (poteaux/poutres), métal (montant ou rail), en bois, en matériau plastique ou composite ou en matériau de synthèse. La mousse minérale selon l'invention peut également enrober une structure de type par exemple treillis (plastique, métallique) ou un pilier ou poutre d'un bâtiment.

Le système selon l'invention peut être utilisé pour réaliser ou fabriquer un doublage, un système d'isolation, ou une cloison, par exemple une cloison séparative, une cloison de distribution ou une contre-cloison.

L'invention se rapporte également à un élément de construction comprenant la mousse minérale selon l'invention.

Quand la mousse minérale selon l'invention est destinée à être projetée sur une paroi verticale, cette paroi pourra être munie des éléments qui facilitent l'accroche de la mousse, par exemple des treillis métalliques ou à base de matériaux plastiques, espacés ou non de la paroi, et solidaires ou non de la paroi. Des armatures verticales pourront être positionnées le long de la paroi pour servir de points d'ancrage des treillis. Ces treillis pourront être de simples fils horizontaux.

La figure 1 est un schéma illustrant le principe de mesure d'un angle de contact entre une goutte d'eau et une surface.

La figure 2 est un schéma illustrant un exemple de mode de réalisation d'un dispositif pour mettre en oeuvre le procédé selon l'invention.

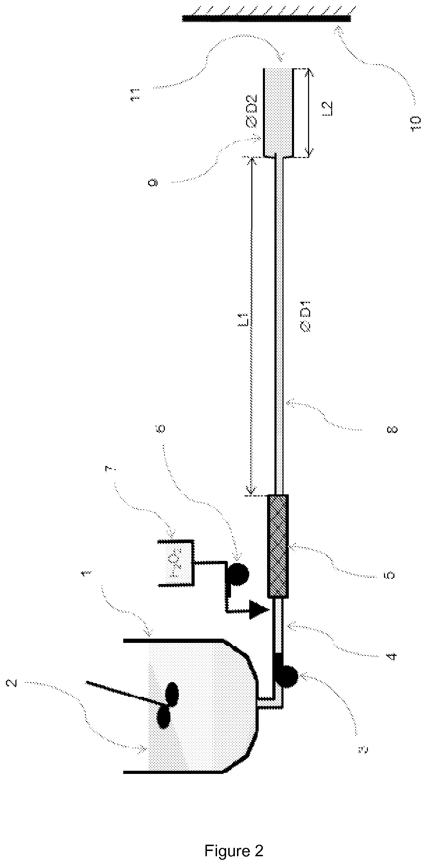

Dans l'exemple présenté à la figure 2, le dispositif comprend une cuve munie d'un agitateur (1), une première pompe (3), un premier tuyau (4), un mélangeur statique (5), une seconde pompe (6), un récipient (7), un second tuyau (8), un élément de sortie (9) et un support (10). Le mélange (2) est le mélange de l'étape (i), et est contenu dans la cuve (1). L'agent porogène est contenu dans le récipient (7). Ils sont pompés en continu indépendamment par les pompes (3) et (6) et mélangés au moyen du mélangeur statique (5). Le tuyau (8) et l'élément de sortie (9) forment une canalisation qui peut comporter des éléments supplémentaires de différentes sections et de différentes longueurs. Les dimensions (L1) et (D1) du tuyau (8) et les dimensions (L2) et (D2) de l'élément de sortie (9) sont choisies de telle façon que les pertes de charges dans la canalisation restent compatibles avec les caractéristiques des écoulements, telles que les débits et les vitesses à la sortie de la canalisation, et avec les moyens de pompage. Le tuyau (8) et de l'élément de sortie (9) sont aussi choisis en fonction de la vitesse de dégagement de dioxygène dans la canalisation, et en particulier du rapport entre le dégagement attendu dans la canalisation et celui attendu après la sortie (11) de la canalisation, et de la régularité de l'écoulement. Généralement, le diamètre (D2) de la partie finale de la canalisation (sortie (11) est choisi comme un moyen de régler la vitesse d'éjection de la mousse tout en maintenant l'intégrité du jet. Dans la gamme de densité selon l'invention, l'expansion n'est pas complète à la sortie de la canalisation (11), et se termine sur le support (10). Généralement, au moins 20% de l'expansion restent à réaliser sur le support (10).

D'autres modes de réalisation d'un dispositif pour mettre en œuvre le procédé selon l'invention peuvent être envisagés.

### Procédé de mesure d'un angle de mouillage ou de contact :

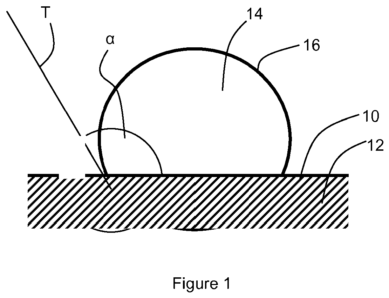

La figure 1 illustre le principe de la mesure d'un angle de mouillage entre une surface solide 10 d'un échantillon 12 en béton et une goutte 14 d'un liquide déposée sur la surface 10. On désigne par la référence 16 l'interface liquide/gaz entre la goutte 14 et l'air ambiant. La figure 1 est une coupe selon un plan perpendiculaire à la surface 10. Dans le plan de coupe, l'angle de mouillage α correspond à l'angle, mesuré depuis l'intérieur de la goutte 14 de liquide, entre la surface 10 et la tangente T à l'interface 16 au point d'intersection entre le solide 10 et l'interface 16.

Pour effectuer la mesure de l'angle de mouillage, l'échantillon 12 est placé dans une salle à température de 20°C et une humidité relative de 50 %. On dispose une goutte d'eau 14 ayant un volume de 2,5 µL sur la surface 10 de l'échantillon 12. La mesure de l'angle est réalisée par un procédé optique, par exemple en utilisant un dispositif d'analyse de forme (en anglais Drop Shape Analysis), par exemple le dispositif DSA 100 commercialisé par Krüss. Les mesures sont répétées cinq fois et la valeur de l'angle de contact mesuré entre la goutte d'eau et le support est égale à la moyenne de ces cinq mesures.

### Méthode de granulométrie laser

Les courbes granulométriques des différentes poudres sont obtenues à partir d'un granulomètre laser de type Mastersizer 2000 (année 2008, série MAL1020429) vendu par la société Malvern.

La mesure s'effectue dans un milieu approprié (par exemple, en milieu aqueux) afin de disperser les particules ; la taille des particules doit être comprise de 1 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20 %. L'échantillon est introduit pour avoir une obscuration légèrement supérieure à 10 %. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BLAINE

La surface spécifique des différents matériaux est mesurée comme suit.

La méthode Blaine à 20°C avec une humidité relative ne dépassant pas 65 % en utilisant un appareil Blaine Euromatest Sintco conforme avec la norme européenne EN 196-6 ;
Avant la mesure de la surface spécifique, les échantillons humides sont séchés dans une étuve jusqu'à l'obtention d'une masse constante à une température de 50 à 150°C (le produit séché est ensuite broyé pour obtenir une poudre dont la taille maximale de particules est inférieure ou égale à 80 µm).

### EXEMPLES

Le procédé selon l'invention a été mis en pratique pour réaliser des mousses minérales de formules 391, 390-a, 390-b et 400. Un exemple comparatif 389 a également été réalisé de manière à mettre en évidence les aspects avantageux du procédé selon l'invention.

### Matériaux :

Le ciment utilisé est un ciment Portland CEMI 52,R provenant de la cimenterie Lafarge Saint Pierre la Cour. La lettre « R » correspond à la définition de la norme NF EN 197-1, version d'avril 2012. Ce ciment a été broyé jusqu'à obtenir une surface spécifique Blaine de 8000 cm²/g.

L'agent réducteur d'eau est un superplastifiant haut réducteur d'eau de nouvelle génération, à base de polycarboxylate modifié vendu sous le nom de Chryso Fluid Premia 180 et provenant de la société Chryso. L'extrait sec du Premia 180 est de 50%, pourcentage en masse. L'agent réducteur d'eau ne contient pas d'agent antimoussant.

Les particules ultrafines sont des particules de carbonate de calcium précipitées vendues sous le nom de Socal 312 et provenant de la société Solvay PCC. Ces particules ultrafines présentent un angle de contact variant de 90° à 130 °tel que mesuré selon la méthode décrite ci-dessus et un D50 des particules de 40 nm tel que mesuré avec la méthode décrite dans le document EP1 740 649.

Le sel de métal de transition est du monohydrate de sulfate de manganèse provenant de la société Sigma Aldrich.

L'addition minérale est une poudre calcaire vendue sous le nom de BL200 Orgon et provenant de la société Omya pour les formules 389, 391, 390-a et 390-b et un laitier de Dunkerque (Origine Arcelor) pour la formule 400. Le D50 du BL200 est de 6 µm et le D50 du laitier est de 14,2 µm.

L'accélérateur de l'hydratation du ciment est du sulfate d'aluminium de concentration 1 mole/l préparé à partir de sulfate d'aluminium hydraté (14H₂0) en poudre provenant de la société VWR.

L'agent porogène est du peroxyde d'hydrogène à 30% provenant de la société VWR.

L'eau est l'eau du robinet.

### Matériels utilisés :

### Malaxeurs Rayneri:

- Un mélangeur modèle R 602 EV (2003) fourni par la société Rayneri. Le mélangeur est composé d'un châssis sur lequel viennent se positionner des cuves allant de 10 à 60 litres. La cuve de 10L a été utilisée avec une pale type palette adaptée au volume de la cuve. Cette pale exerce un mouvement de rotation sur elle-même accompagné d'un mouvement planétaire autour de l'axe de la cuve.

### Pompes :

- Une pompe (I) à vis excentrée Seepex^{™} de type MD 006-24 n° de commission 244920.
- Une pompe (II) à vis excentrée Seepex^{™} de type MD 006-24 n° de commission 278702.

### Mélangeur statique :

- Un mélangeur statique composé de 32 éléments hélicoïdaux de type Kenics de 19mm de diamètre référencé 16La632 chez ISOJET

### I. Réalisation de mousses minérales

### Préparation de la pâte pour les formules 389, 391, 390-a et 390-b:

La pâte est préparée en mélangeant les composés du tableau I dans les proportions respectives indiquées dans ce tableau. La pâte est ensuite malaxée avec l'eau dans un malaxeur planétaire (marque Rayneri) pendant 5 min. La densité de la mousse à l'état frais après expansion est mesurée.

**Tableau 1**

| | Formulations | | | | |
|---|---|---|---|---|---|
| | 389 | 391 | 390-a | 390-b | 400 |
| ciment* | 71,9 | 71,9 | 71,9 | 71,9 | 71,46 |
| agent réducteur d'eau* | 0,2 | 0,2 | 0,2 | 0,2 | 0,4 |
| particules ultrafines* | 4,83 | 4,83 | 4,83 | 4,83 | 4,8 |
| sel de métal de transition* | 0,72 | 1,43 | 0,36 | 0,36 | 1,6 |
| addition minérale* | 22,35 | 21,64 | 22,71 | 22,71 | 21,74 |
| total | 100 | 100 | 100 | 100 | 100 |
| agent porogène** | 7,1 | 4,6 | 3 | 5,6 | 4,5 |
| Eau / ciment*** | 0,76 | 0,76 | 0,76 | 0,76 | 0,76 |
| *les valeurs sont des pourcentages exprimés en masse par rapport à la masse | | | | | |
| ** pourcentages en masse par rapport à la masse de ciment | | | | | |
| *** ratio en masse | | | | | |

Avant application de la mousse sur un mur en parpaings servant de support, le mur est traité, au moyen d'un pulvérisateur, par aspersion d'une solution de sulfate d'aluminium 1 mole/l.

Puis la pâte est pompée en continu au moyen d'une pompe à vis (marque Seepex (I)) dans une canalisation principale de 15 mm de diamètre. Simultanément, la solution aqueuse de peroxyde d'hydrogène est pompée au moyen d'une autre pompe à vis (marque Seepex (II)) et injectée en continu dans la canalisation dans laquelle circule la pâte. Les débits respectifs de pompage sont indiqués dans le tableau 2. Le mélange entre la pâte et la solution est accéléré par la présence d'un mélangeur statique placé dans la canalisation principale et localisé immédiatement en aval du point d'injection de la solution de peroxyde d'hydrogène. La canalisation en aval du mélangeur statique est d'une longueur de 5,5 m.

**Tableau 2**

| | Formulations | | | |
|---|---|---|---|---|
| | 389 | 391 | 390-a | 390-b |
| débit en kg/min | 5.5 | 5.5 | 5.5 | 5.5 |
| débit en kg/min (H₂O₂) | 0,590 | 0,37 | 0,24 | 0,52 |

La canalisation est équipée d'un applicateur (adaptateur de diamètre) qui augmente à 20 mm le diamètre de la tubulure de sortie sur une longueur de 20 cm.

On observe que la pâte obtenue à la sortie de l'applicateur n'est que partiellement aérée (moins de 50% de la fraction d'oxygène totale est intégrée à la pâte à ce stade) et son expansion se poursuit après dépose. La pâte est déposée sur le mur au seul moyen du jet de sortie, qui maintient son intégrité jusqu'au point de dépose. La densité de la mousse à l'état frais après expansion est mesurée.

Le mur est recouvert en faisant varier progressivement la position du point de dépose, jusqu'à recouvrement total du mur par la mousse après expansion complète. Une couche de 3 cm environ est ainsi obtenue. Le système est laissé en l'état jusqu'à ce que la prise du ciment soit démarrée, soit environ 2h30 à température ambiante.

L'opération de dépose de mousse est réitérée une seconde fois, exactement dans les mêmes conditions que la première fois. Une seconde couche de 3 cm environ est déposée. La pâte est alors talochée pour lisser les inégalités et lui donner un aspect fini.

### Préparation de la pâte pour la formule 400 :

Les pourcentages étant exprimés en masse, la pâte est préparée en mélangeant les composés suivants:
71,46% de ciment broyé jusqu'atteindre une surface spécifique Blaine de 8000 cm²/g.
22,2% de Laitier de Dunkerque
4,80% de particules ultrafines traitées (Socal 312 de Solvay PCC)
1,6% de monohydrate de sulfate de manganèse
0,4% d'un superplastifiant Premia 180
On rajoute 4,5%, calculé par rapport au ciment, de H₂O₂ sous la forme d'une solution à 30%.

### II. Analyse de la mousse minérale

### II.1 Conductivité thermique des mousses minérales

La conductivité thermique (λ) a été mesurée à l'aide d'un appareil de mesure de la conductivité thermique : CT-mètre fourni par la société Alphis-ERE (Résistance 5Ω, fil sonde 50mm). La mesure a été effectuée sur des échantillons séchés à 45°C jusqu'à masse constante. L'échantillon a ensuite été coupé en deux morceaux égaux à l'aide d'une scie. La sonde de mesure a été placée entre les deux faces planes de ces deux moitiés d'échantillons (cotés sciés). La chaleur a été transmise de la source vers le thermocouple à travers le matériau entourant la sonde. L'élévation de température du thermocouple a été mesurée en fonction du temps et a permis de calculer la conductivité thermique de l'échantillon.

### II.2 Densité des mousses minérales

La densité humide des coulis de ciment moussés a été mesurée par pesée des cubes au moment du coulage et après expansion complète.

La densité sèche des échantillons a été mesurée sur des échantillons séchés à 45°C jusqu'à masse constante, toujours par pesée des cubes.

**Tableau 3**

| | Formulations | | | | |
|---|---|---|---|---|---|
| | 389 | 391 | 390-a | 390-b | 400 |
| λ en W/m.K | 0,048 | 0,072 | 0,11 | 0,051 | 0,070 |
| Densité à l'état frais en kg/m³ | 80 | 200 | 340 | 98 | 189 |
| Densité à l'état sec en kg/m³ | 70 | 160 | 271 | 80 | 130 |

## Revendications

1. Procédé de réalisation en continu d'une mousse minérale dont la masse volumique à l'état sec (d) est comprise de 40 à 600 kg/m³, comprenant les étapes suivantes :
(i) mélanger
¤ du ciment ;
¤ un agent réducteur d'eau ;
¤ 0,5 à 10 %, % en masse par rapport à la masse totale de ciment, de particules ultrafines présentant un angle de contact liquide-solide compris de 30° à 140°, mesuré selon la méthode décrite dans la description, et dont le D50 est compris 10 à 600 nm ;
¤ de l'eau, avec un ratio massique eau / ciment compris de 0,3 à 2,5 ;
(ii) ajouter au mélange de 0,5 à 10 % d'un agent porogène, % en masse par rapport à la masse de ciment ;
(iii) mettre en place le mélange obtenu à l'étape (ii) sur un support ;
(iv) laisser le mélange s'expanser sur le support.

2. Procédé selon la revendication 1 dans lequel le ciment du mélange de l'étape (i) est un ciment dont la surface spécifique Blaine est comprise de 5000 à 9000 cm²/g.

3. Procédé selon l'une quelconque des revendications précédentes dans lequel il n'y a pas d'agent moussant dans le mélange de l'étape (i) ou (ii).

4. Procédé selon l'une quelconque des revendications précédentes dans lequel le mélange de l'étape (i) ou de l'étape (ii) comprend en outre un sel de métal de transition, par exemple un sel de manganèse ou un sel de fer.

5. Procédé selon l'une quelconque des revendications précédentes dans lequel le mélange de l'étape (i) comprend en outre une addition minérale telle qu'une pouzzolane, un laitier, du carbonate de calcium, une cendre volante, un sable ou leurs mélanges, et dont les particules présentent un D50 compris de 0,1 à 4 mm.

6. Procédé selon l'une quelconque des revendications précédentes dans lequel l'agent porogène ajouté à l'étape (ii) est une solution de peroxyde d'hydrogène, une solution d'acide peroxomonosulfurique, une solution d'acide persoxodisulfurique, une solution de peroxydes alcalins, une solution de peroxydes alcalinoterreux ou une solution de peroxyde organique tel que l'acide peroxoacétique ou l'acide peroxobenzoïque, ou une suspension de particules d'aluminium ou leurs mélanges.

7. Procédé selon l'une quelconque des revendications précédentes dans lequel le mélange de l'étape (i) comprend en outre un accélérateur de l'hydratation du ciment, par exemple du chlorure de calcium.

8. Procédé selon l'une quelconque des revendications précédentes dans lequel le mélange obtenu à l'étape (ii) n'est pas fractionné.

9. Procédé selon l'une quelconque des revendications précédentes dans lequel à l'étape (iii), le mélange est mis en place sans utiliser de buse de pulvérisation.

10. Procédé selon l'une quelconque des revendications précédentes dans lequel l'étape (iii) est réalisée sans pulvérisation.

11. Procédé selon l'une quelconque des revendications précédentes dans lequel le support utilisé à l'étape (iii) est traité préalablement à la mise en place du mélange obtenu à l'étape (ii).

12. Mousse minérale susceptible d'être obtenue selon le procédé des revendications 4 à 11.

13. Utilisation de la mousse minérale selon la revendication 12 comme matériau d'isolation, en particulier comme matériau d'isolation thermique ou phonique.

## Patentansprüche

1. Unterbrechungsfreies Herstellungsverfahren eines mineralischen Schaumstoffs, dessen Volumenmasse im trockenen Zustand (d) zwischen 40 und 600 kg/m³ inbegriffen ist, umfassend die folgenden Schritte:
(i) Mischen
¤ des Zements;
¤ eines Wasser-Reduktionsmittels;
¤ 0,5 bis 10 % in Masse-% in Bezug auf die Gesamtmasse des Zements, auf ultrafeine Partikel, wobei ultrafeine Partikel einen Kontaktwinkel Flüssigkeit / Feststoff aufweisen, der zwischen 30° und 140° inbegriffen ist, gemessen gemäß der in der Beschreibung beschriebenen Methode, und deren D50 zwischen 10 und 600 nm inbegriffen ist;
¤ des Wassers mit einem Masseverhältnis Wasser / Zement, das zwischen 0,3 und 2,5 inbegriffen ist;
(ii) Hinzufügen von 0,5 bis 10 % eines Quellmittels zur Mischung in Masse-% in Bezug auf die Zementmasse;
(iii) Einsetzen der in Schritt (ii) erhaltenen Mischung auf einem Träger;
(iv) Ausdehnen-Lassen der Mischung auf dem Träger.

2. Verfahren gemäß Anspruch 1, bei dem der Zement der Mischung aus Schritt (i) ein Zement ist, dessen spezifische Blaine-Oberfläche zwischen 5000 und 9000 cm²/g inbegriffen ist.

3. Verfahren gemäß irgendeinem der voranstehenden Ansprüche, bei dem es kein Schaummittel in der Mischung des Schritts (i) oder (ii) gibt.

4. Verfahren gemäß irgendeinem der voranstehenden Ansprüche, bei dem die Mischung des Schritts (i) oder des Schritts (ii) darüber hinaus ein Übergangsmetall-Salz, z. B. ein Mangansalz oder ein Eisensalz, umfasst.

5. Verfahren gemäß irgendeinem der voranstehenden Ansprüche, bei dem die Mischung des Schritts (i) darüber hinaus einen mineralischen Zusatz, wie z. B. Puzzolan, eine Schlacke, Kalziumkarbonat, eine fliegende Asche, einen Sand oder deren Mischungen umfasst und deren Partikel ein zwischen 0,1 und 4 mm inbegriffenes D50 aufweisen.

6. Verfahren gemäß irgendeinem der voranstehenden Ansprüche, bei dem das dem Schritt (ii) hinzugefügte Quellmittel eine Wasserstoffperoxid-Lösung, eine Peroxomono-Schwefelsäurelösung, eine Persoxodi-Schwefelsäurelösung, eine Lösung aus alkalinen Peroxiden, eine Lösung aus Erdalkali-Peroxiden oder eine Lösung aus organischem Peroxid ist, wie z. B. Peroxo-Essigsäure oder Peroxo-Benzoesäure oder eine Suspension aus Aluminiumpartikeln oder deren Mischungen ist.

7. Verfahren gemäß irgendeinem der voranstehenden Ansprüche, bei dem die Mischung des Schritts (i) darüber hinaus einen Beschleuniger der Hydrierung des Zements, zum Beispiel Kalziumchlorid, umfasst.

8. Verfahren gemäß irgendeinem der voranstehenden Ansprüche, bei dem die in Schritt (ii) erhaltene Mischung nicht fraktioniert wird.

9. Verfahren gemäß irgendeinem der voranstehenden Ansprüche, bei dem in Schritt (iii) die Mischung ohne Verwenden einer Sprühdüse eingesetzt wird.

10. Verfahren gemäß irgendeinem der voranstehenden Ansprüche, bei dem Schritt (iii) ohne Versprühen realisiert wird.

11. Verfahren gemäß irgendeinem der voranstehenden Ansprüche, bei dem der in Schritt (iii) verwendete Träger vor dem Einsetzen der in Schritt (ii) erhaltenen Mischung behandelt wird.

12. Mineralischer Schaumstoff, der gemäß den Ansprüchen 4 bis 11 erhalten wird.

13. Verwendung des mineralischen Schaumstoffs gemäß Anspruch 12 als Dämmmaterial, insbesondere als Wärme- oder Schalldämmmaterial.

## Claims

1. Method for continuously producing a mineral foam of which the density in the dry state (d) is comprised from 40 to 600 kg/m³, comprising the following steps:
(i) mixing
¤ cement;
¤ a water reducing agent;
¤ 0.5 to 10 %, % by weight with respect to the total weight of cement, of ultrafine particles having a liquid-solid contact angle comprised from 30° to 140°, measured according to the method described in the description, and of which the D50 is comprised from 10 to 600 nm;
¤ water, with a water/cement weight ratio comprised from 0.3 to 2.5;
(ii) adding to the mixture from 0.5 to 10 % of a pore-forming agent, % by weight with respect to the weight of cement;
(iii) applying the mixture obtained at step (ii) on a support;
(iv) leaving the mixture to expand on the support.

2. Method according to claim 1, wherein the cement of the mixture of step (i) is a cement of which the Blaine specific surface area is comprised from 5000 to 9000 cm²/g.

3. Method according to any one of the preceding claims, wherein there is no foaming agent in the mixture of step (i) or (ii).

4. Method according to any one of the preceding claims, wherein the mixture of step (i) or step (ii) further comprises a transition metal salt, for example a manganese salt or an iron salt.

5. Method according to any one of the preceding claims, wherein the mixture of step (i) further comprises a mineral addition such as a pozzolan, a slag, calcium carbonate, a fly ash, a sand or mixtures thereof, and of which the particles have a D50 comprised from 0.1 to 4 mm.

6. Method according to any one of the preceding claims, wherein the pore-forming agent added at step (ii) is a solution of hydrogen peroxide, a solution of peroxomonosulphuric acid, a solution of peroxodisulphuric acid, a solution of alkaline peroxides, a solution of alkaline earth peroxides or a solution of organic peroxides such as peroxoacetic acid or peroxobenzoic acid, or a suspension of aluminium particles or mixtures thereof.

7. Method according to any one of the preceding claims, wherein the mixture of step (i) further comprises a hydration accelerator of the cement, for example calcium chloride.

8. Method according to any one of the preceding claims, wherein the mixture obtained at step (ii) is not fractionated.

9. Method according to any one of the preceding claims, wherein at step (iii) the mixture is applied without using a spray nozzle.

10. Method according to any one of the preceding claims, wherein step (iii) is carried out without spray.

11. Method according to any one of the preceding claims, wherein the support used at step (iii) is treated prior to the application of the mixture obtained at step (ii).

12. Mineral foam capable of being obtained according to the method of claims 4 to 11.

13. Use of the mineral foam according to claim 12 as insulation material, in particular as thermal or phonic insulation material.
